(19) Europäisches Patentamt
European Patent Office
Office européen des brevets

(11) Veröffentlichungsnummer: **0 385 073 B1**

(12) **EUROPÄISCHE PATENTSCHRIFT**

(45) Veröffentlichungstag der Patentschrift: **14.06.95**

(51) Int. Cl.$^{6}$: **C08L 21/00**, C08K 5/39

(21) Anmeldenummer: **90100693.2**

(22) Anmeldetag: **13.01.90**

(54) **Reifenseitenwände mit erhöhter Stabilität und Verfahren zu ihrer Herstellung.**

(30) Priorität: **28.02.89 DE 3906126**

(43) Veröffentlichungstag der Anmeldung:
**05.09.90 Patentblatt 90/36**

(45) Bekanntmachung des Hinweises auf die Patenterteilung:
**14.06.95 Patentblatt 95/24**

(84) Benannte Vertragsstaaten:
**AT BE CH DE ES FR GB IT LI LU NL SE**

(56) Entgegenhaltungen:
**DE-C- 2 265 382**

(73) Patentinhaber: **HÜLS AKTIENGESELLSCHAFT**

**D-45764 Marl (DE)**

(72) Erfinder: **Hörpel, Gerhard, Dr.**
**Lerchenhain 84**
**D-4405 Nottuln (DE)**
Erfinder: **Nordsiek, Karl-Heinz, Dr.**
**Neumarkstrasse 4**
**D-4370 Marl (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 385 073 B1

## Beschreibung

Die vorliegende Erfindung betrifft neuartige Seitenwände von Reifen, die sich durch eine erhöhte Langzeitstabilität auszeichnen.

Ein Kraftfahrzeugreifen macht auf den ersten Blick äußerlich einen homogenen Eindruck. Dieses Bild täuscht, wie der Fachmann weiß. An jedes Reifenteil, sei es den Laufstreifen, die Seitenwand, die Schulter oder irgend ein anderes Teil, werden höchst unterschiedliche Anforderungen im Hinblick auf Elastizität, Dynamik und Abrieb gestellt. Dementsprechend unterscheiden sich die Vulkanisationsmischungen der einzelnen Reifenbauteile mitunter beträchtlich im Hinblick auf Kautschukkomponenten, Vulkanisationsmittel und Füllstoffe.

Eine besondere Bedeutung kommt in diesem Zusammenhang der Reifenseitenwand zu. Seit der Einführung der Radialreifen werden an die Funktion dieses Reifenteils erhöhte Anforderungen gestellt. Im Mittelpunkt steht ein Maximum an Flexibilität in allen Fahrzuständen. Das bedeutet ständig wechselnde dynamische Beanspruchungen unter einem breiten Spektrum von klimatischen Bedingungen.

Um den Anforderungen der enormen Dauerbiegebeanspruchung von Reifenseitenwände zu genügen, gilt es, Vulkanisate mit optimalen elastischen Eigenschaften bei gleichzeitig hoher mechanischer Haltbarkeit und ausreichendem Abriebwiderstand zu entwickeln. Diesen Zielvorgaben kann in der Regel durch Einsatz spezieller Polydienkautschuke wie NR-, BR- sowie auch spezieller SBR-Typen, insbesondere in Form von Verschnitten, entsprochen werden.

Probleme stellen sich jedoch, wenn eine immer höhere Alterungs-, Ozon- und Witterungsstabilität gefordert wird, um eine längere Lebensdauer der Reifenseitenwände zu garantieren. Zur Lösung dieses Problems werden im wesentlichen zwei Wege beschritten:

1. Einsatz von Ozonschutzwachsen, Antioxydantien sowie Antiozonantien vom Typ speziell substituierter p-Phenylendiamine.
2. Der verschnittweise Einsatz von EP(D)M-Kautschuken.

Der erste Weg weist den Nachteil auf, daß die Hilfsstoffe in der Regel höher dosiert werden müssen, als es ihrer Löslichkeit im Kautschuk entspricht. Die Folge sind Ausblühungen an der Oberfläche mit häßlichen Ablagerungen, die die angestrebte Wirksamkeit und damit die Lebensdauer des Reifens reduzieren. Die in gleichem Maße stattfindende Diffusion in Gegenrichtung kann die Karkasslage in ihrer Funktion negativ beeinflussen. Als Folge hiervon besteht die Gefahr, daß Lagetrennungen auftreten können, die ein erhebliches Sicherheitsrisiko darstellen. Der Einsatz der genannten Hilfsstoffe ist darüber hinaus infolge ihrer verfärbenden Wirkung bei der Herstellung von Reifen mit hellfarbigen Seitenwänden nicht praktikabel.

Mit dem Einsatz von EPDM-Kautschuken wird zwar das Auswandern der genannten niedermolekularen Hilfsstoffe vermieden, aber bei Kombinationen von Polydienen mit EPDM-Kautschuken kommt es infolge mangelnder Covulkanisation zu erheblichen Einbrüchen bei den mechanischen Eigenschaften.

Ziel der vorliegenden Erfindung war es somit, Reifenseitenwände aufzufinden, die neben optimalen elastischen Eigenschaften, einer hohen mechanischen Haltbarkeit und einem hohen Abriebwiderstand darüber hinaus eine erhöhte Alterungs- und Witterungsstabilität aufweisen.

Es wurden jetzt Reifenseitenwände gefunden, die ausgezeichnete Flexibilität, herausragende Alterungs- und Witterungsstabilität mit ausgezeichneten mechanischen und dynamischen Eigenschaften verbinden, ohne Verfärbungen zu ergeben. Sie zeigen eine erhöhte Beständigkeit gegenüber Rißbildung, die bekanntlich auf eine chemische Schädigung der Netzwerkstruktur bei langjähriger Nutzung oder kurzzeitige extreme Beanspruchung zurückzuführen ist. Diese neuartigen Reifenseitenwände enthalten anstelle der üblichen Schwefelbrücken 1,2-Dithioalkandiyl-Brücken mit 2 bis 6 C-Atomen. Diese weisen die Formel

$$- S - (CH_2)_n - S -$$

auf, wobei n eine ganze Zahl zwischen 2 und 6 ist.

Die Erfindung beruht auf der Entdeckung, daß die neuen Brückenglieder eine gegenüber konventionellen Schwefel-Vulkanisaten überlegene Netzwerkstabilität garantieren. Die Dauerbiegebeanspruchung führt in diesem Falle zu kühleren Lauftemperaturen und bietet so eine Voraussetzung für einen erheblich verlängerten Erhalt der Ausgangsqualität von Kfz-Reifen. Neben dem Aspekt der Sicherheit ist die geringere Wärmebildung auch für eine günstigere Gestaltung des Rollwiderstandes und damit auch für die Wirtschaftlichkeit eines Reifens von erheblicher Bedeutung.

Auch die übrigen Vulkanisateigenschaften wie beispielsweise Reißfestigkeit, Reißdehnung, Weiterreißwiderstand, vor allem aber die der Elastizität zuzuordnenden Eigenschaften, insbesondere der heatbuild up, zeigen ein überlegenes Verhalten.

Zwar war es grundsätzlich aus der DE-PS 22 65 382 bekannt, daß man mit Vulkanisationsmitteln der allgemeinen Formel

$B - S - S_x - R - S_x - S - B$,

wobei B ein beliebiger, üblicher Beschleuniger, R ein nahezu beliebiger, organischer Rest und X eine Zahl zwischen 1 und 4 ist, eine Verbesserung der sogenannten Reversion, d. h. der anaeroben Alterung im Vulkanisat erzielen kann; diese Schrift gab aber dem Fachmann keine Anregungen, wie man die Langzeitstabilität von Reifenseitenwänden erhöhen kann. Dies wird an folgenden Einzelheiten deutlich:

1. Die meisten der in der DE-OS 22 65 382 genannten Vulkanisationsmittel sind für den erfindungsgemäßen Zweck gar nicht geeignet, da sie den Beanspruchungen eines Dauerbiegetest, inbesondere nach Alterung, nicht standhalten. So fällt die Zahl der erreichbaren Zyklen beim Fatique to failure-Test [vg]. Kautschuk und Gummi, Kunststoffe, 33, 105 (1980)] bei einer schwefelvulkanisierten NR-Qualität von ca. 70 000 Zyklen als Ausgangswert nach einer Woche Lagerung im Umlufttrockenschrank bei 100 °C auf Werte von 1 000 bis 5 000 Zyklen. Völlig gleichartig zusammengesetzte Vulkanisate mit den erfindungsgemäßen Netzbrücken erreichen dagegen Ausgangswerte, die etwa zehn Prozent über dem genannten Vergleich liegen und nach entsprechender Alterung immer noch Werte von etwa 35 000 Zyklen erreichen. Ähnliche Befunde gelten für reine SBR-Qualitäten und die Mischungen SBR/BR und NR/BR.

2. Der in der DE-OS 22 65 382 empfohlene zusätzliche Einsatz von Schwefel verschärft wiederum die Probleme der Langzeitstabilität des elastomeren Gebrauchsartikels.

3. Unter den zahlreichen bekannten Beschleunigerresten erfüllt lediglich der Diethyldithiocarbamoylrest die zahlreichen Anforderungen der Praxis wie Reaktionsgeschwindigkeit, Löslichkeit im Kautschuk, Geruch, Schmelzpunkt und Molekulargewicht.

Die Einführung der erfindungsgemäßen Netzbrücken erfolgt mit Vulkanisationsmitteln der Formel

$$(H_5C_2)_2N - \overset{\overset{S}{\|}}{C} - S - S - (CH)_n - S - S - \overset{\overset{S}{\|}}{C} - N(C_2H_5)_2$$

mit n = 2 bis 6.

Ausgangspunkt der Synthese für die erfindungsgemäß zu verwendenden Vernetzer sind Dichloralkane. Die Umsetzung mit Natriumthiosulfat führt in wäßriger Lösung zum Bis-Buntesalz. Dessen Reaktion mit Natriumdiethyldithiocarbamat liefert die gewünschten Verbindungen.

Die Herstellung der Vulkanisate erfolgt in an sich bekannter Weise. Es können dabei sämtliche der üblicherweise eingesetzten Chemikalien, Füllstoffe, Weichmacher und Harze zum Einsatz kommen.

Auf Alterungsschutzmittel kann weitgehend verzichtet werden. Auch Ozonschutzmittel erwiesen sich vielfach als überflüssig.

Als Kautschuke für das erfindungsgemäße Verfahren eignen sich Polydiene wie NR, IR, E-SBR, L-SBR, Vinyl-SBR, cis-BR und Vinyl-BR und deren Verschnitte.

Infolge der verlängerten Anvulkanisation der erfindungsgemäß einzusetzenden Verbindungen sind beim Einarbeiten der Vernetzungsmittel in die Kautschuke als auch bei den Verfahrensschritten der Verformung auch kurzfristige höhere Wärmebelastungen ohne Schaden möglich.

Die zusätzliche Verwendung von Schwefel und üblichen Beschleunigern sollte unterbleiben, da damit die Wärmestabilität, vor allem aber die Dauerhaltbarkeit der Seitenwände, negativ beeinflußt werden.

Die höhere Wärmebelastung des hier beschriebenen Systems gestattet die Anwendung hoher Vulkanisationstemperaturen. Bei Reaktionszeiten bei 180 °C bis zu 30 Minuten werden selbst bei reinem NRkeinerlei Einbußen bei den Materialeigenschaften registriert. Sämtliche SBR- und BR-Typen sind deutlich über diese Grenze hinaus belastbar.

Erläuterungen zum experimentellen Teil

Der in den nachfolgenden Versuchen eingesetzte Naturkautschuk (NR) wies nach Vormastikation eine Mooney-Viskosität (DIN) von 50 auf. Ruß N 550 ist ein Ruß vorgegebener Aktivität (vgl. ASTM D 1765). HAR Öl ist ein Gemisch aus Ölen mit einem überwiegenden Anteil aromatischer Kohlenwasserstoffe.

VULKANOX[R] 4010 (N-Isopropyl-N'-phenyl-p-phenylendiamin) ist ein Vulkanisationsbeschleuniger, der von der Fa. Bayer AG, D-5090 Leverkusen vertrieben wird.

VULKANOX® 4020 (N-1,3-Dimethylbutyl)-N'-phenyl-p-phenylendiamin) ist ein Alterungs- und Ozonschutzmittel, das von der Fa. Bayer AG, D-5090 Leverkusen, vertrieben wird.

CBS (N-Cyclohexyl-1-benzothiazolsulfenamid) ist ein Vulkanisationsbeschleuniger, der unter dem Warenzeichen VULKAZIT® CZ von der Fa. Bayer AG, D-5090 Leverkusen vertrieben wird.

Die Zugfestigkeit und Bruchdehnung wurden gemäß DIN 53 504 bestimmt. Der Spannungswert, auch Modul genannt, bei 300 % Dehnung wurde gemäß DIN 53 504 bestimmt.
Die Strukturfestigkeit wurde nach Pohle (Weiterreißwiderstand) (vgl. S. Boström, Kautschuk-Handbuch, Band 5, Seite 123) bestimmt.
Die bleibende Dehnung (Zugverformungsrest) wurde gemäß DIN 53 518 bestimmt.
Die Härte (Shore A) wurde gemäß DIN 53 505 bestimmt.
Die Rückprallelastizität (Elast.) wurde gemäß DIN 53 512 bestimmt.
Der Abrieb wurde gemäß DIN 53 516 bestimmt.
Die Prüfung der Wärmebildung (heat built-up) erfolgte gemäß DIN 53 533, Teil 3 mit Hilfe des Goodrich-Flexometers, im Versuchsteil wurden folgende erschwerte Bedingungen gewählt:
Last: 500 N, Starttemperatur: 50 °C, Zeit: 25 Minuten
Monsanto Fatigue gemäß Kautschuk und Gummi, Kunststoffe 33, 105 (1980).

Ozontest gemäß DIN 53 509

Die mit dem Goodrich Flexometer gemessenen Temperaturen lassen erkennen, daß mit den erfindungsgemäß erhaltenen Vulkanisaten im Vergleich zum Stand der Technik niedrigere Temperaturen erreicht werden.

Beispiel 1 und Vergleichsbeispiel A

Mit Hilfe eines Innenmischers vom Typ GK 2 der Firma Werner und Pfleiderer werden ei einer Rotordrehzahl von 50 UpM sowie einer Manteltemperatur von 40 °C folgende Mischungen bereitet.

| | Vergleichsbeispiel A | Beispiel 1 |
|---|---|---|
| NR | 60 phr | 60 phr |
| SBR 1500 | 40 phr | 40 phr |
| Ruß N 550 | 50 phr | 50 phr |
| HAR Öl | 12 phr | 12 phr |
| Zinkoxid | 3 phr | 3 phr |
| Stearinsäure | 2 phr | 2 phr |
| VULKANOX® 4010 Na | 1,5 phr | - |
| VULKANOX® 4020 | 1,5 phr | - |
| Vernetzungssystem | | |
| Schwefel | 1,7 phr | - |
| CBS | 1,0 phr | - |
| Bis-thiocarbamoyl-disulfid-hexan | - | 4 phr |

Dabei erfolgte die Zugabe der Zuschlagstoffe nach 1 Minute Vorlaufzeit des Kautschuks. Die Mischung wird 1 Minute nach überschreiten des Energiemaximums des Rotors ausgestoßen.

Nach 6stündiger Ablagerungszeit werden auf einem Walzwerk bei einer Walztemperatur von 50 °C innerhalb von 5 Minuten die Vernetzungsmittel eingearbeitet.

Ergebnisse der Vulkanisationsprüfung:

| | Vergleichsbeispiel A | | | Beispiel 1 | | |
|---|---|---|---|---|---|---|
| | nach 30 Minuten Vulkanisation bei 150 °C | nach Alterung bei 100 °C | | nach 30 Minuten Vulkanisation bei 150 °C | nach Alterung bei 100 °C | |
| | | 7 d | 14 d | | 7 d | 14 d |
| Zugfestigkeit MPa | 16,7 | 10,6 | 5,9 | 17,1 | 15,9 | 9,9 |
| Bruchdehnung % | 548 | 151 | 67 | 582 | 420 | 283 |
| Modul 350 % MPa | 7,1 | - | - | 7,2 | 11,4 | - |
| Weiterreißwiderstand nach Pohle N/mm | 59 | 19 | 11 | 61 | 38 | 22 |
| bleibende Dehnung % | 13 | 3 | 1 | 16 | 7 | 5 |
| Härte 25 °C Sh. A | 58 | 65 | 75 | 57 | 60 | 66 |
| Härte 75 °C Sh. A | 51 | 55 | 68 | 51 | 53 | 58 |
| Elastizität 20 °C % | 54 | 56 | 51 | 53 | 55 | 54 |
| Elastizität 75 °C % | 64 | 65 | 62 | 64 | 65 | 66 |

Ergebnisse der Vulkanisationsprüfung: (Fortsetzung)

| | Vergleichsbeispiel A | | | Beispiel 1 | | |
|---|---|---|---|---|---|---|
| | nach 30 Minuten Vulkanisation bei 150 °C | nach Alterung bei 100 °C | | nach 30 Minuten Vulkanisation bei 150 °C | nach Alterung bei 100 °C | |
| | | 7 d | 14 d | | 7 d | 14 d |
| Abrieb $mm^3$ | 95 | 184 | 238 | 87 | 138 | 176 |
| Goodrich Flexometer °C | 42 | 44 | 40 | 39 | 37 | 37 |
| Monsanto Fatigue Zahl der Cyklen | 63 000 | 2 000 | 630 | 72 000 | 34 000 | 31 000 |
| Ozon Test 6 h | 0 | 0 | 1 | 0 | 0 | 0 |
| (DIN 53 509) 24 h | 1 | 1 | 2 | 1 | 1 | 1 |
| 200 ppm/50 °C 48 h | 2 | 2 | 2 | 1 | 1 | 1 |

Beispiel 2 und Vergleichsbeispiel B

Mit Hilfe eines Innenmischers vom Typ GK 2 der Firma Werner und Pfleiderer werden bei einer Rotordrehzahl von 50 UpM sowie einer Manteltemperatur von 40 °C folgende Grundmischungen bereitet:

| | Vergleichsbeispiel B | Beispiel 2 |
|---|---|---|
| NR | 40 phr | 40 phr |
| BR | 20 phr | 20 phr |
| SBR 1500 | 40 phr | 40 phr |
| Ruß N 550 | 50 phr | 50 phr |
| HAR Öl | 12 phr | 12 phr |
| Zinkoxid | 3 phr | 3 phr |
| Stearinsäure | 2 phr | 2 phr |
| VULKANOX$^R$ 4010 Na | 1,5 phr | - |
| VULKANOX$^R$ 4020 | 1,5 phr | - |
| Vernetzungssystem | | |
| Schwefel | 1,6 phr | - |
| CBS | 1,1 phr | - |
| Bis-thiocarbamoyl-disulfid-hexan | - | 4 phr |

Dabei erfolgte die Zugabe der Zuschlagstoffe nach 1 Minute Vorlaufzeit des Kautschuks. Die Mischung wird 1 Minute nach überschreiten des Energiemaximums des Rotors ausgestoßen.

Nach 6stündiger Ablagerungszeit werden auf einem Walzwerk bei einer Walztemperatur von 50 °C innerhalb von 5 Minuten die Vernetzungsmittel eingearbeitet.

Ergebnisse der Vulkanisationsprüfung:

| | Vergleichsbeispiel B | | | Beispiel 2 | | |
|---|---|---|---|---|---|---|
| | nach 30 Minuten Vulkanisation bei 150 °C | nach Alterung bei 100 °C | | nach 30 Minuten Vulkanisation bei 150 °C | nach Alterung bei 100 °C | |
| | | 7 d | 14 d | | 7 d | 14 d |
| Zugfestigkeit MPa | 15,8 | 9,9 | 4,8 | 17,3 | 14,8 | 8,9 |
| Bruchdehnung % | 586 | 134 | 56 | 588 | 438 | 299 |
| Modul 350 % MPa | 6,9 | - | - | 7,4 | 11,1 | - |
| Weiterreißwiderstand nach Pohle N/mm | 51 | 17 | 9 | 54 | 39 | 25 |
| bleibende Dehnung % | 12 | 4 | 1 | 14 | 8 | 5 |
| Härte 25 °C Sh. A | 62 | 68 | 76 | 61 | 66 | 68 |
| Härte 75 °C Sh. A | 56 | 56 | 67 | 56 | 58 | 61 |
| Elastizität 20 °C % | 54 | 57 | 55 | 56 | 57 | 57 |
| Elastizität 75 °C % | 63 | 66 | 65 | 64 | 66 | 66 |

Ergebnisse der Vulkanisationsprüfung: (Fortsetzung)

| | Vergleichsbeispiel B | | | Beispiel 2 | | |
|---|---|---|---|---|---|---|
| | nach 30 Minuten Vulkanisation bei 150 °C | nach Alterung bei 100 °C 7 d | 14 d | nach 30 Minuten Vulkanisation bei 150 °C | nach Alterung bei 100 °C 7 d | 14 d |
| Abrieb $mm^3$ | 88 | 162 | 220 | 86 | 142 | 171 |
| Goodrich Flexometer °C | 39 | 37 | 37 | 37 | 36 | 36 |
| Monsanto Fatigue Zahl der Cyklen | 59 000 | 1 400 | - | 78 000 | 37 000 | 32 000 |
| Ozon Test 6 h | 0 | 0 | 1 | 0 | 0 | 0 |
| 24 h | 1 | 1 | 2 | 1 | 1 | 1 |
| 200 ppm/50 °C 48 h | 2 | 2 | 2 | 1 | 1 | 1 |

Beispiel 3 und Vergleichsbeispiel C

Mit Hilfe eines Innenmischers vom Typ GK 2 der Firma Werner und Pfleiderer werden bei einer Rotordrehzahl von 50 UpM sowie einer Manteltemperatur von 40 °C folgende Grundmischungen bereitet:

| | Vergleichsbeispiel C | Beispiel 3 |
|---|---|---|
| NR | 50 phr | 50 phr |
| BR | 50 phr | 50 phr |
| Ruß N 550 | 50 phr | 50 phr |
| HAR Öl | 12 phr | 12 phr |
| Zinkoxid | 3 phr | 3 phr |
| Stearinsäure | 2 phr | 2 phr |
| VULKANOX$^R$ 4010 Na | 1,5 phr | - |
| VULKANOX$^R$ 4020 | 1,5 phr | - |
| Vernetzungssystem | | |
| Schwefel | 2 phr | - |
| CBS | 0,7 phr | - |
| Bis-thiocarbamoyl disulfid-hexan | - | 4 phr |

Dabei erfolgte die Zugabe der Zuschlagstoffe nach 1 Minute Vorlaufzeit des Kautschuks. Die Mischung wird 1 Minute nach überschreiten des Energiemaximums des Rotors ausgestoßen.

Nach 6stündiger Ablagerungszeit werden auf einem Walzwerk bei einer Walztemperatur von 50 °C innerhalb von 5 Minuten die Vernetzungsmittel eingearbeitet.

Ergebnisse der Vulkanisationsprüfung:

| | Vergleichsbeispiel C | | | Beispiel 3 | | |
|---|---|---|---|---|---|---|
| | nach 30 Minuten Vulkanisation bei 150 °C | nach Alterung bei 100 °C | | nach 30 Minuten Vulkanisation bei 150 °C | nach Alterung bei 100 °C | |
| | | 7 d | 14 d | | 7 d | 14 d |
| Zugfestigkeit MPa | 14,7 | 8,8 | 5,5 | 14,5 | 13,3 | 9,9 |
| Bruchdehnung % | 520 | 128 | 68 | 501 | 414 | 286 |
| Modul 350 % MPa | 7,1 | - | - | 7,3 | 10,3 | - |
| Weiterreißwiderstand nach Pohle N/mm | 45 | 14 | 8 | 48 | 35 | 23 |
| bleibende Dehnung % | 12 | 3 | 1 | 11 | 8 | 6 |
| Härte 25 °C Sh. A | 62 | 69 | 76 | 62 | 65 | 68 |
| Härte 75 °C Sh. A | 56 | 58 | 68 | 56 | 58 | 61 |
| Elastizität 20 °C % | 57 | 59 | 55 | 57 | 58 | 58 |
| Elastizität 75 °C % | 64 | 66 | 64 | 65 | 66 | 66 |

**Ergebnisse der Vulkanisationsprüfung: (Fortsetzung)**

| | Vergleichsbeispiel C | | | Beispiel 3 | | |
|---|---|---|---|---|---|---|
| | nach 30 Minuten Vulkanisation bei 150 °C | nach Alterung bei 100 °C 7 d | 14 d | nach 30 Minuten Vulkanisation bei 150 °C | nach Alterung bei 100 °C 7 d | 14 d |
| Abrieb $mm^3$ | 69 | 136 | 198 | 61 | 112 | 148 |
| Goodrich Flexometer °C | 35 | 37 | 39 | 34 | 33 | 33 |
| Monsanto Fatigue Zahl der Cyklen | 68 000 | 1 800 | - | 82 000 | 44 000 | 36 000 |
| Ozon Test 6 h | 0 | 0 | 1 | 0 | 0 | 0 |
| 24 h | 1 | 1 | 2 | 1 | 1 | 1 |
| 200 ppm/50 °C 48 h | 2 | 2 | 2 | 1 | 1 | 1 |

## Patentansprüche

1. Seitenwände von Kfz-Reifen, hergestellt durch Vulkanisation von Mischungen, die neben Polydienkautschuken Vulkanisationsmittel und übliche Zuschlagstoffe enthalten,
dadurch gekennzeichnet,
daß das Netzwerk durch 1,2-Dithioalkandiyl-Brücken mit 2 bis 6 C-Atomen gebildet wird.

2. Reifenseitenwände gemäß Anspruch 1,
dadurch gekennzeichnet,
daß als Vulkanisationsmittel für die Herstellung der Seitenwandvulkanisate Bisthiocarbamoylverbindungen der allgemeinen Formel

$$(H_5C_2)_2N - \overset{S}{\underset{}{\overset{\|}{C}}} - S - S - (CH_2)_n - S - S - \overset{S}{\overset{\|}{C}} - N(C_2H_5)_2$$

mit n = 2 - 6
eingesetzt werden.

**3.** Reifenseitenwände gemäß Anspruch 2,
dadurch gekennzeichnet,
daß n die Bedeutung von 2 hat.

**Claims**

**1.** Side walls of motor vehicle tyres produced by vulcanization of mixtures which contain, apart from polydiene rubbers, vulcanizers and customary additives, characterized in that the network is formed by 1,2-di-thioalkanediyl bridges having from 2 to 6 carbon atoms.

**2.** Tyre side walls according to claim 1, characterized in that the vulcanizers used for the production of the side wall vulcanizates are bisthiocarbamoyl compounds of the general formula

$$(H_5C_2)_2N - \overset{S}{\overset{\|}{C}} - S - S - (CH_2)_n - S - S - \overset{S}{\overset{\|}{C}} - N(C_2H_5)_2$$

where n = 2 - 6.

**3.** Tyre side walls according to claim 2, characterized in that n is 2.

**Revendications**

**1.** Flancs pour pneumatiques de camion, fabriqués par vulcanisation de mélanges qui, à côté de caoutchoucs polydiéniques, renferment des vulcanisants et des additifs usuels,
caractérisés en ce que le réseau est formé par des ponts 1,2-dithio-alkane-di-yle comportant de 2 à 6 atomes de carbone.

**2.** Flancs de pneumatiques selon la revendication 1,
caractérisés en ce que l'on utilise, comme vulcanisants, pour la fabrication des produits de vulcanisation constituants les flancs, des bis-thio-carbamoyl-composés de la formule générale

$$(H_5C_2)_2N - \overset{S}{\overset{\|}{C}} - S - S - (CH_2)_n - S - S - \overset{S}{\overset{\|}{C}}\ N(C_2H_5)_2$$

n ayant une valeur de 2 à 6.

**3.** Flancs de pneumatiques selon la revendication 2,
caractérisés en ce que n est égal à 2.